(19) **Europäisches Patentamt**

**European Patent Office**

**Office européen des brevets**

(11) **EP 1 202 429 B1**

(12) **EUROPEAN PATENT SPECIFICATION**

(45) Date of publication and mention
of the grant of the patent:
**20.07.2005 Bulletin 2005/29**

(51) Int Cl.$^7$: **H02J 9/06**

(21) Application number: **00830719.1**

(22) Date of filing: **31.10.2000**

(54) **An emergency lighting unit usable with different types of batteries**

Notlichteinheit zur Verwendung mit verschiedenen Batterietypen

Bloc d'éclairage de sécurité utilisables avec différents types de batteries

(84) Designated Contracting States:
**AT BE CH CY DE DK ES FI FR GB GR IE IT LI LU
MC NL PT SE**

(43) Date of publication of application:
**02.05.2002 Bulletin 2002/18**

(73) Proprietor: **MAGNETEK S.p.A.
52028 Terranuova Bracciolini (AR) (IT)**

(72) Inventors:
• **Canova, Antonio
52025 Montevarchi Arezzo (IT)**

• **Martini, David
52028 S. Giovanni Valdarno Arezzo (IT)**
• **Cini, Simone
52025 Montevarchi Arezzo (IT)**

(74) Representative: **Mannucci, Michele et al
Ufficio Tecnico Ing.A. Mannucci,
Via della Scala 4
50123 Firenze (IT)**

(56) References cited:
**US-A- 4 237 385          US-A- 4 571 531
US-A- 6 049 178**

Printed by Jouve, 75001 PARIS (FR)

**Description**

The present invention relates to emergency lighting equipment or devices of the type containing an emergency unit capable of providing an independent power supply to a lamp or fluorescent tube if the mains supply fails.

The invention relates more particularly to an emergency unit for this type of equipment or device.

Emergency lighting devices of the type comprising a ballast supplying at least one lamp, an emergency battery and an emergency unit are available at the present time. The emergency unit comprises a battery charger, a control circuit and an inverter for supplying the lamp in emergency conditions, in other words in the absence of electrical mains power. In emergency, the power is supplied by the battery, which is kept charged by the battery charger during normal operation.

These devices must meet specific requirements established by the regulations in force in various countries, primarily relating to the reserve time of the device in emergency conditions, in other words the minimum guaranteed duration of operation in emergency conditions. When the battery capacity and the minimum reserve time of the device have been specified, the current which the battery can supply to the lamp is determined. For example, when a 4 Ah battery is used, for a reserve time of 3 hours, the maximum discharge current, in other words the current which the battery can supply to the lamp during operation in emergency conditions, is 1.1 A. For a reserve time of 1 hour, the maximum discharge current is 2.1 A.

The power supplied by the battery in emergency operating conditions is

$$P = V * I$$

where V is the voltage of the battery and I is the current supplied. Emergency lighting devices are designed for use with a single type of battery, and in particular with a battery having a specific voltage, for example 12 V. The same device is not suitable for operation with batteries of different voltages.

This limitation is due to two factors. In the first place, when the voltage of the battery is increased the recharging time increases, with the result that a device having a battery charger designed to provide a given recharging time for 12 V batteries, for example, is not capable of charging a battery having a higher voltage, for example 14.4 V, with the same recharging time.

Secondly, the battery voltage decreases during discharge and the emergency operation of the device has to be interrupted when the voltage across the terminals of each cell forming the battery reaches 0.8 V. This minimum voltage corresponds to a voltage across the battery terminals which depends on the number of cells making up the battery. In emergency lighting devices of the conventional type, using, for example, 12 V batteries consisting of ten cells (1.2 V nominal per cell), the supply of current in emergency conditions is made to cease when the voltage across the battery terminals reaches 8 V (called the "undervoltage'), corresponding to a voltage of 0.8 V per cell.

A protective circuit for emergency lighting units for this purpose is known from US-A-4.571.531.

If a battery with a larger number of cells is used in a device of this type, it will continue to supply current even when the voltage of the individual cell falls below 0.8 V. For example, if a twelve-cell battery (14.4 V) is used, the undervoltage of 8 V means that a voltage of 0.67 V across the terminals of each individual cell is reached. This is not acceptable, since it causes irreversible battery damage.

The object of the present invention is to provide an emergency unit which enables batteries of different voltages to be used.

The object of an improved embodiment of the present invention is to provide a unit of the aforesaid type which enables an essentially constant charging time to be maintained while the battery voltage varies.

According to a different aspect, the object of the invention is to provide a unit which makes it possible to use batteries which differ in respect of the variation of their charging current.

In practice, the invention provides an emergency lighting unit comprising

- a connection for a battery,
- an inverter for supplying, in emergency conditions, a discharge current supplied by said battery to a lamp connectable to said unit,
- a battery charger,

<u>characterized in that</u> it has means for setting a minimum operating voltage across the terminals of the battery, below which the discharge current from said battery is interrupted, said minimum operating voltage being variable according to the rated voltage of the battery.

The possibility of using different batteries with the same device and the same emergency unit provides a number of advantages for the manufacturer and the installer, since it is not necessary to design, produce, store, distribute and install different devices to match the types of batteries to be used. Furthermore, from the installer's point of view, there is the advantage of being able to replace the battery with another which is not necessarily identical.

Since, as pointed out above, the power consumption and therefore the brightness of the light emitted by the lamp in emergency conditions (in other words, when it is supplied by the battery) is a function of the battery voltage V, the possibility of using batteries of different voltages enables the installer to modify the light flux in emergency operating conditions simply by replacing one battery with another one having a different voltage.

The minimum operating voltage can be set manually, for example by providing jumpers or switches, after the characteristics of the fitted battery have been ascertained. Preferably, however, in a particularly advantageous embodiment of the invention, an automatic circuit for recognition of the rated battery voltage is provided; this circuit also determines the minimum operating voltage, or undervoltage.

Theoretically, the battery charger can be a conventional battery charger. However, according to another aspect of the invention, the battery charger is such that its operating conditions are adapted to the type of battery fitted, thus conforming to the charging conditions of the battery used at any time.

In the first place, it is possible to make the battery charger supply a constant charging current, independently of the rated battery voltage, for example by using a switching power supply unit. In another development of the invention, it is possible to cause the charging voltage to be modified over time, with a stepwise variation for example, to adapt to the charging conditions of special batteries, such as metal-hydride nickel batteries.

The invention also relates to a method for supplying a discharge lamp in emergency conditions by means of an emergency battery, in which said lamp is supplied from said battery through an inverter. The method according to the invention is characterized in that the value of the rated voltage of the battery is determined and a minimum voltage across the terminals of said battery is specified as a function of said rated voltage, the supply of current from said battery to said inverter being interrupted below this minimum voltage.

Further advantageous characteristics of the emergency unit, of the device and of the method according to the invention are indicated in the attached claims.

The invention will be more clearly understood from the description and the attached drawing, which shows a practical and non-restrictive example of the invention. In the drawing,

Fig. 1 is a block diagram of the lighting device;
Fig. 2 is a block diagram of the emergency unit;
Fig. 3 is a circuit diagram of a battery charger;
Fig. 4 shows the variation of the charging current for a type of battery usable with the emergency device.
Fig. 5 is a first diagram of a circuit for recognizing the battery voltage and setting the undervoltage;
Fig. 6 is a diagram of a second, modified embodiment of the circuit for recognizing the battery voltage and setting the undervoltage;
Fig. 7 is a diagram of a third, modified embodiment of the circuit for recognizing the battery voltage and setting the undervoltage;
Fig. 8 is a diagram of a fourth, modified embodiment of the circuit for recognizing the battery voltage and setting the undervoltage;
Fig. 9 is a diagram of a fifth, modified embodiment of the circuit for recognizing the battery voltage and setting the undervoltage; and
Fig. 9A shows a waveform of the circuit of Fig. 9.

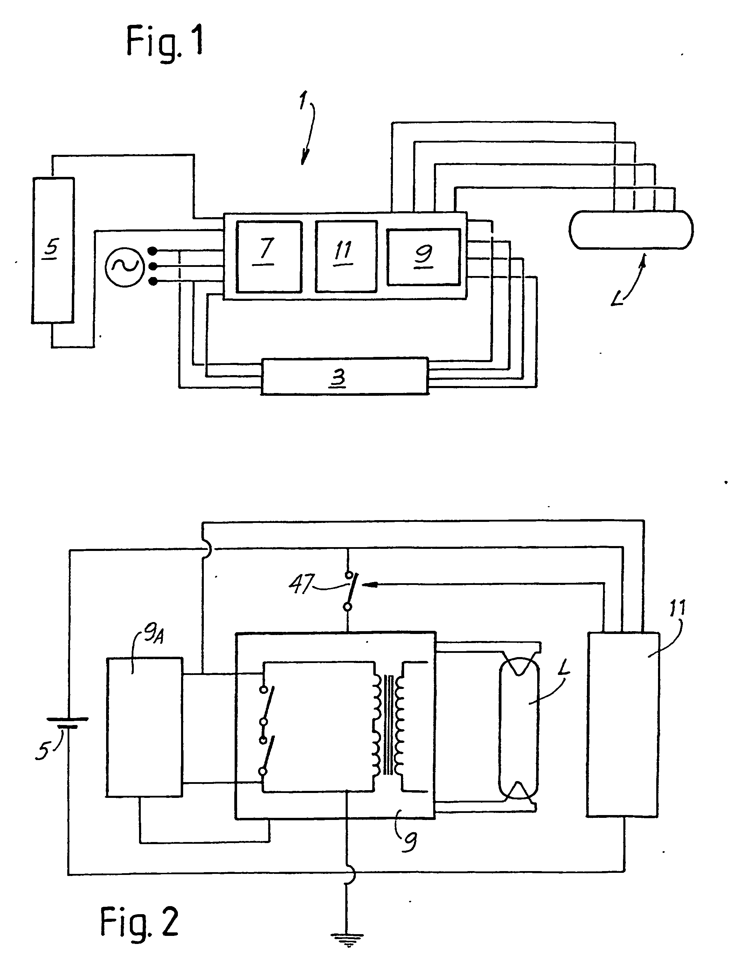

Fig. 1 shows a block diagram of the device. It comprises an emergency unit 1, a ballast 3 for supplying the fluorescent lamp L in normal supply conditions, in other words when the voltage is supplied from the mains, and a battery 5 for supply in emergency conditions, connectable to the unit 1.

The switching from the mains supply to the emergency supply takes place in a known way and the corresponding parts of the circuit are not illustrated here.

The emergency unit 1 comprises a battery charger 7 capable of charging the battery 5 when the mains power is present, in other words in normal operating conditions. It also comprises an inverter 9 capable of supplying the lamp L with the power taken from the battery 5 when the mains power is absent, and a control circuit 11 which controls the inverter 9 during operation in emergency conditions. The circuit 11 can be of conventional type.

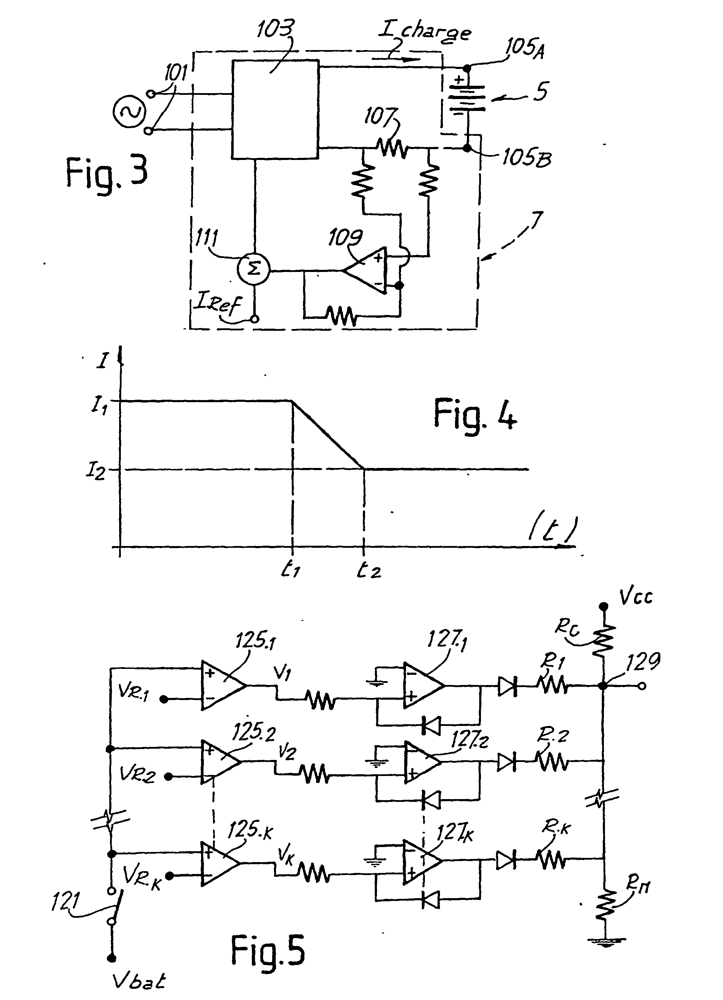

Fig. 3 shows a circuit for a battery charger capable of supplying a constant recharging current to the battery 5 independently of the voltage of the battery, in other words of the number of cells which make up the battery. The battery charger comprises a connection 101 to the electrical mains, a switching power supply unit 103, a connection 105A, 105B to the battery 5, and a resistance 107 connected across the terminals of an operational amplifier 109. The output of the amplifier 109, at which there is a signal proportional to the current $I_{charge}$ which the power supply unit 103 supplies to the battery 5 being recharged, is compared by means of a comparator 111 with a reference signal $I_{ref}$.

The error signal generated by the comparator 111 is used as a feedback signal for controlling the switching power supply unit 103. The control is such that the current $I_{charge}$ is kept at a constant value in time.

For NiCd batteries, this value is typically 200 mA for batteries with a capacity of 4 Ah, and 100 mA for batteries with a capacity of 2 Ah.

The circuit of Fig. 3 can be improved to make it possible to use batteries of another type, for example metal-hydride nickel batteries. These batteries require a charging current which is not constant over time, but varies as illustrated in Fig. 4, in other words being equal to a value $I_1$ for a first charging period, typically of 16 hours, and then equal to a lower value $I_2$. To obtain this variation of the charging current it is simply necessary to modify, by means of a suitable timer, the value of the reference signal $I_{ref}$ at the input of the comparator 111.

To adapt the device to the use of batteries of different voltages, it is possible to provide for manual setting of the undervoltage, by means of jumpers, switches or other devices. In a particularly advantageous alternative embodiment, a circuit for automatic recognition of the voltage of the battery connected to the charger can be provided, to permit automatic setting of the undervoltage. An example of an embodiment of this circuit is shown in Fig. 5. It comprises a time delay switch 121 which is closed after a predetermined time interval, of the order of 30-60 s after the start of the discharge of the battery, in other words after the start of operation of the device in emergency lighting conditions.

This time interval is necessary because the battery voltage can be read only during the discharge of the battery, and at this stage it is also sufficiently independent of the temperature. In particular, for NiCd batteries the manufacturers state that there is a voltage of 1.3-1.35 V per cell after a discharge time of 30-60 s.

The switch 121 connects a terminal 123, at the battery voltage $V_{bat}$, to the non-inverting inputs of a set of K comparators 125.1-125.K, where

$$K = N_{max} - N_{min}$$

where
$N_{min}$ = minimum number of cells making up the battery
$N_{max}$ = maximum number of cells making up the battery
A reference voltage $V_{R1}$ - $V_{RK}$, where
$V_{R1} > V_{R2} > ... > V_{RK}$,
is applied to the negative input of each comparator 125.1-125.K. The output voltage $V_1$-$V_K$ of each individual comparator is connected to the non-inverting output of a corresponding amplifier 127.1 - 127.K, whose inverting terminal is connected to earth. The outputs of the amplifiers 127.1 - 127.K are connected to corresponding resistors $R_1$ - $R_K$, where

$$R_1 < R_2 < ... < R_K,$$

which, in turn, are connected to a node 129. This is connected through a resistor $R_C$ to the voltage $V_{bat}$ and through a resistor $R_N$ to earth.

In the circuit of Fig. 5, when the switch 121 is closed the generic output $V_i$ of the generic comparator 125.i goes to the high value and the corresponding resistor $R_i$ is connected in parallel with the resistor $R_C$. An increase in the value of the battery voltage (in other words an increase in the number of cells making up the battery) is accompanied by an increase in the number of outputs $V_1 ... V_K$ which go to the high value, and consequently an increase in the number of resistors $R_1 ... R_K$ connected in parallel with the resistor $R_C$.

The voltage in the node 129 is the undervoltage ($V_{undervoltage}$) which will be equal to

$$V_{undervoltage} = \frac{R_N}{R_N + R_{eq}} V_{cc} \qquad (1)$$

where $V_{cc}$ is a reference voltage and

$$R_{eq} = \frac{1}{(1/R_1)+(1/R_2) ... + (1/R_i)+(1/R_C)} \qquad (2)$$

where i is the number of outputs $V_1$ - $V_K$ brought to the high value, which depends on the battery voltage.
For example, if

$$V_{R1} = N_{max}{}^*V_{cell} - \varepsilon$$

$$V_{RK} = N_{min}{}^*V_{cell} - \varepsilon$$

where
$V_{cell}$ is the voltage across the terminals of the individual cell (typically 1.2-1.3 V), $\varepsilon$ is the tolerance on the battery voltage:

- if the battery consists of $N_{min}$ cells, only the output $V_K$ will be at the high value and the remaining outputs will be at the low value;
- if the battery consists of $N_{min}$ + 1 cells, the outputs $V_K$, $V_{K-1}$ are at the high value, while the remaining outputs are at the low value and the resistance $R_C$ will be connected in parallel with two resistors $R_1$, $R_2$.

The final voltage at the node 129 will therefore depend on the number of cells making up the battery, and will be accepted as the minimum voltage (undervoltage) at which the emergency unit will interrupt the discharge current. This value is stored by means of the amplifiers 127.1-127.K which form corresponding latch or storage circuits, so that the value of the undervoltage is not modified during operation in emergency conditions, despite the fall in voltage across the terminals of the battery as a result of the gradual running down of the battery.

Other configurations for the battery voltage recognition circuit are possible. In general, this circuit will carry out a battery voltage reading operation consisting of the following stages:

- switching on the emergency unit;
- reading the battery voltage, after a wait time (approximately 30-60 s);
- setting the undervoltage;
- storing the undervoltage.

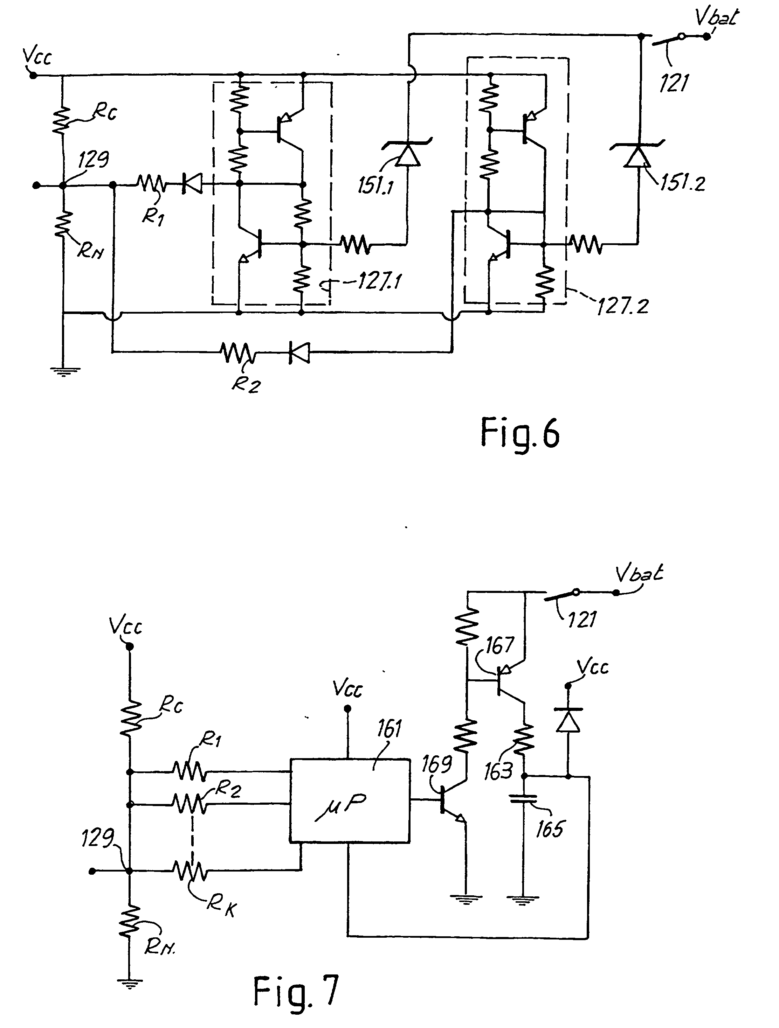

Figs. 6 to 9A show alternative embodiments of the battery voltage recognition circuit. The circuit of Fig. 6 comprises a connection to the battery voltage $V_{bat}$ through a time delay switch, again indicated by 121, and a connection to a reference voltage $V_{cc}$. $R_N$ and $R_C$ indicate two resistors corresponding to the resistors indicated by the same references in Fig. 5. The number 129 indicates the point at which the undervoltage $V_{undervoltage}$ is generated. The circuit also comprises two Zener diodes 151.1 and 151.2, two resistors $R_1$ and $R_2$, and two latch circuits, indicated in a general way by 127.1 and 127.2. Each of these latch circuits comprises two transistors, of the pnp and npn type respectively, connected in such a way that, when they become conducting, this state of conduction is maintained. The arrangement shown here provides two voltage comparison thresholds, but can clearly be multiplied by a multiple arrangement of resistors $R_1$, $R_2$ ... $R_K$, latch circuits 127.1 ... 127.K and Zener diodes 151.1 ... 151.K. According to the battery voltage $V_{bat}$, a variable number of diodes 151 will be caused to conduct, after the switch 121 is closed with a certain delay after the start of operation in emergency conditions, in ways and for reasons similar to those described above with reference to the description of Fig. 5. When a Zener diode 151 conducts, this will cause the two transistors of the corresponding latch circuit 127 to become conducting, and this circuit will remain conducting even if the battery voltage $V_{bat}$ falls as a result of the gradual discharge of the battery. When the transistors of each circuit 127 become conducting, this causes the corresponding resistor $R_1$, $R_2$ to be connected to the node 129 in parallel with the resistor $R_N$, in ways similar to those described with reference to Fig. 5. The equivalent resistance of the parallel connection of one or both of the resistors $R_1$, $R_2$ with the resistor $R_N$ modifies the value of the voltage at the point 129, which will be accepted as the undervoltage. As in the preceding case, the resistors $R_1$ and $R_2$ are calculated in a suitable way to determine the required undervoltage for each rated battery voltage.

Fig. 7 shows a diagram of a recognition circuit based on the use of a microprocessor 161. This has an input connected to an RC branch, comprising a resistor 163 and a capacitor 165, connected to the battery voltage $V_{bat}$ through a transistor 167 and a time delay switch 121 having functions similar to those of the switch 121 of Fig. 5. The charging time of the capacitor 165 depends on the battery voltage $V_{bat}$. The capacitor is connected to an input of the microprocessor 161, which changes its level with a delay depending on the charging time of the capacitor 165 and therefore, ultimately, on the battery voltage $V_{bat}$. The delay with which the microprocessor input signal changes to the high value enables the microprocessor 161 to identify the value of the rated battery voltage; according to this value, the microprocessor proceeds to connect a variable number of resistors $R_1$ ... $R_K$ in parallel with the resistor $R_N$. In this case also, the voltage at the point 129 is equal to the undervoltage, and will be defined by formulae (1) and (2) above.

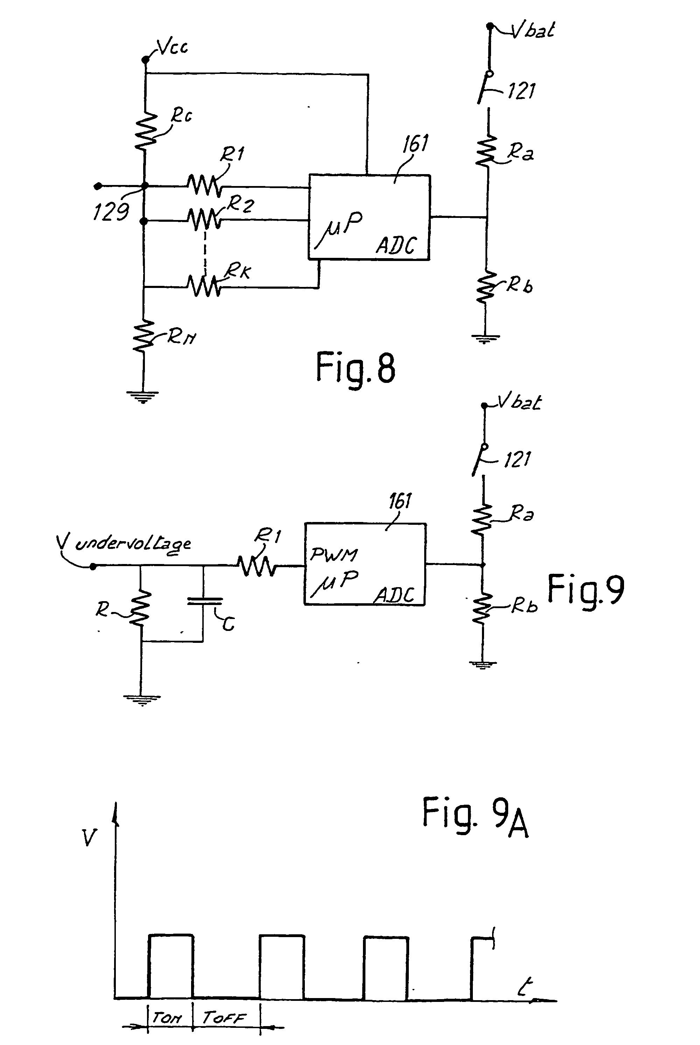

Fig. 8 shows a circuit diagram which is similar to that of Fig. 7, but makes use of a microprocessor 161 provided with an analog-digital input, in other words one capable of converting an analog signal to a digital signal. This input is connected to a branch containing two resistors $R_a$, $R_b$, across whose terminals the battery voltage $V_{bat}$ is applied. A time delay switch 121 carries out the functions described above; in other words, it applies the battery voltage $V_{bat}$ after a predetermined interval following the start of operation in emergency conditions. The input signal of the microprocessor 161 is converted to a digital signal and compared with a set of values stored in table form in the microprocessor and corresponding to different possible values of the battery voltage. By means of a simple comparison between the signal obtained by the conversion of the analog input signal and the stored values, the microprocessor 161 can determine which of the resistors $R_1$ ... $R_K$ is to be connected to the node 129, in parallel with the resistor $R_N$, to obtain the undervoltage at the node 129, according to formulae (1) and (2) above.

Fig. 9 shows a further embodiment of the circuit for recognition of the battery voltage $V_{bat}$. Identical numbers indicate parts identical or corresponding to those of the circuit of Fig. 8. In this case, the microprocessor 161 has a PWM output, at which there is a signal having a waveform shown schematically in Fig. 9A. The PWM output of the microprocessor 161 is connected, through a resistor $R_1$, to a cell RC at whose output there is a voltage equal to the mean value of the PWM signal and corresponding to the undervoltage. This is because the value of the duty cycle of the output signal of the microprocessor 161 depends on the value (converted to digital form) of the analog signal at the input of the microprocessor, this analog value being proportional to the battery voltage $V_{bat}$.

It is to be understood that the drawing shows only a possible embodiment of the invention, which can be varied in its forms and arrangements without departure from the scope as defined by the claims. The presence of any reference numbers in the attached claims does not limit the scope of protection of the claims, and has the sole purpose of facilitating the reading of the claims with reference to the preceding description and to the attached drawings.

**Claims**

1. An emergency lighting unit comprising

   • a connection for a battery (5),
   • an inverter (9) for supplying, in emergency conditions, a discharge current from said battery (5) to a lamp (L) connectable to said unit,
   • a battery charger (7),

   **characterized in that** it has means for setting a variable minimum operating voltage ($V_{undervoltage}$) across the terminals of the battery, below which the discharge current from said battery is interrupted, said minimum operating voltage being variably settable according to the rated voltage of the battery (5).

2. The unit as claimed in claim 1, **characterized in that** it comprises a circuit for recognizing the rated voltage of the battery.

3. The unit as claimed in claim 2, **characterized in that** said battery voltage recognition circuit has a time delay switch (121) which is closed after a predetermined time interval following the start of the supply of the discharge current from said battery to said inverter (9).

4. The unit as claimed in claim 2 or 3, **characterized in that** it comprises a plurality of resistors ($R_1$-$R_K$) connectable in parallel with a node (129), the number of resistors connected to said node being determined by the rated battery voltage and the voltage in said node being a fraction of the rated battery voltage (5), determined from the number of said resistors connected in parallel.

5. The unit as claimed in claim 2, 3 or 4, **characterized in that** said recognition circuit comprises means of storing the battery voltage.

6. The unit as claimed in claim 4 or 5, **characterized in that** said recognition circuit comprises a plurality of comparators (125.1-125.K), each of which compares a signal proportional to the rated battery voltage with a comparison signal ($V_{R1}$-$V_{RK}$), said comparison signals having a value increasing from a minimum to a maximum according to the rated voltage of the batteries (5) usable with said unit, the outputs of said comparators being connected to said resistors ($R_1$-$R_K$) and the value of the output signal of each comparator determining whether or not the corresponding resistor ($R_1$-$R_K$) is connected in parallel to said node (129).

7. The unit as claimed in claim 6, **characterized in that** it comprises, for each comparator, a storage circuit (127.1-127.K).

8. The unit as claimed in one or more of claims 2 to 5, **characterized in that** said recognition circuit comprises a microprocessor (161).

9. The unit as claimed in claim 8, **characterized in that** said microprocessor has an input to which is applied a signal which is a function of the rated battery voltage, and a plurality of outputs associated with corresponding resistors ($R_1$...$R_K$), said processor connecting to a node (129) a number of said resistors, variable according to the signal at said input.

10. The unit as claimed in claim 8, **characterized in that** said microprocessor has an input to which is applied a signal which is a function of the rated battery voltage, and an output with a PWM signal, whose duty cycle depends on the input signal.

11. The unit as claimed in one or more of the preceding claims, **characterized in that** the operating conditions of said battery charger vary according to the type of battery (5) fitted.

12. The unit as claimed in claim 11, **characterized in that** said battery charger supplies a constant current to said battery (5) during recharging.

13. The unit as claimed in claim 11 or 12, **characterized in that** said battery charger comprises a switching power supply unit (103) and feedback means which modify the power supply conditions in such a way as to keep the recharging current of the battery (5) constant.

14. An emergency lighting device, comprising, in combination, a connection to a power supply line, a ballast for supplying at least one discharge lamp from the power supplied by said line, and an emergency unit as claimed in one or more of the preceding claims.

15. A method for supplying a discharge lamp in emergency conditions by means of an emergency battery (5), in which said lamp (L) is supplied from said battery through an inverter (9), wherein supply from said battery is interrupted when the voltage across the battery terminals falls below a minimum voltage value; **characterized by** the steps of: providing a setting circuit for setting a variable minimum voltage across the terminals of said battery, determining the value of the rated voltage of said battery (5); by means of said circuit setting the value of said minimum voltage ($V_{undervoltage}$) as a function of the rated voltage value of said battery thus determined.

16. The method as claimed in claim 15, **characterized in that** said rated voltage is determined automatically during emergency operation.

17. The method as claimed in claim 16, **characterized by** the stages of:

   • switching on the emergency unit;
   • determining the rated battery voltage after a wait time (approximately 30-60 s);
   • setting the minimum voltage ($V_{undervoltage}$);
   • storing the minimum voltage.

**Patentansprüche**

1. Notlichteinheit, umfassend:

   - einen Anschluss für eine Batterie (5),
   - einen Inverter (9) zum Zuführen, unter Notfallbedingungen, eines Entladestroms von der Batterie (5) zu einer Lampe (L), die an die Einheit anschließbar ist,
   - ein Batterieladegerät (7)

   **dadurch gekennzeichnet, dass** sie Mittel zum Einstellen einer vanablen minimalen Betriebsspannung ($V_{undervoltage}$) über den Anschlüssen der Batterie aufweist, unter der der Entladestrom von der Batterie unterbrochen wird, wobei die minimale Betriebsspannung variable gemäß der Nennspannung der Batterie (5) einstellbar ist.

2. Einheit nach Anspruch 1, **dadurch gekennzeichnet, dass** sie eine Schaltung zum Erkennen der Nennspannung der Batterie aufweist.

3. Einheit nach Anspruch 2, **dadurch gekennzeichnet, dass** die Batteriespannungs-Erkennungsschaltung einen Zeitverzögerungsschalter (121) aufweist, der nach einem vorbestimmten Zeitintervall nach dem Beginn der Zuführung des Endladestroms von der Batterie zum Inverter (9) geschlossen wird.

4. Einheit nach Anspruch 2 oder 3, **dadurch gekennzeichnet, dass** sie eine Mehrzahl von Widerständen ($R_1$-$R_k$) aufweist, die parallel mit einem Knotenpunkt (129) geschaltet werden können, wobei die Anzahl der an den Knotenpunkt angeschlossenen Widerstände durch die Nennbatteriespannung bestimmt wird, und die Spannung in dem Knotenpunkt ein Bruchteil der Batterienennspannung (5) ist, der von der Anzahl der parallel geschalteten Widerstände bestimmt wird.

5. Einheit nach Anspruch 2, 3 oder 4, **dadurch gekennzeichnet, dass** die Erkennungsschaltung Mittel zum Speichern der Batteriespannung aufweist.

6. Einheit nach Anspruch 4 oder 5, **dadurch gekennzeichnet, dass** die Erkennungsschaltung eine Mehrzahl von Komparatoren (125.1-125-K) aufweist, von denen jeder ein Signal proportional zu der Batterienennspannung mit einem Vergleichssignal ($V_{R1}$-$V_{RK}$) vergleicht, wobei die Vergleichssignale einen Wert aufweisen, der von einem Minimum zu einem Maximum in Übereinstimmung mit der Nennspannung der mit der Einheit verwendbaren Batterien (5) steigt, wobei die Ausgänge der Komparatoren mit den Widerständen ($R_1$-$R_K$) verbunden sind und der Wert des Ausgangssignals jedes Komparators bestimmt, ob der entsprechende Widerstand ($R_1$-$R_K$) parallel zu dem Knoten (129) geschaltet wird.

7. Einheit nach Anspruch 6, **dadurch gekennzeichnet, dass** sie für jeden Komparator eine Speicherschaltung (127.1-127.K) aufweist.

8. Einheit nach einem oder mehreren der Ansprüche 2 bis 5, **dadurch gekennzeichnet, dass** die Erkennungsschaltung einen Mikroprozessor (161) aufweist.

9. Einheit nach Anspruch 8, **dadurch gekennzeichnet, dass** der Mikroprozessor einen Eingang aufweist, an den ein Signal angelegt wird, das eine Funktion der Nennbatteriespannung ist, und eine Mehrzahl von mit den entsprechenden Widerständen ($R_1$...$R_K$) verknüpften Ausgängen aufweist, wobei der Prozessor eine Anzahl der Widerstände mit einem Knotenpunkt (129) verbindet, die in Übereinstimmung mit dem Signal an dem Eingang variabel ist.

10. Einheit nach Anspruch 8, **dadurch gekennzeichnet, dass** der Mikroprozessor einen Eingang, an den ein Signal angelegt wird, das eine Funktion der Batterienennspannung ist, und einen Ausgang mit einem Pulsdauermodulationssignal aufweist, dessen Tastgrad von dem Eingangssignal abhängt.

11. Einheit nach einem oder mehreren der vorhergehenden Ansprüche, **dadurch gekennzeichnet, dass** die Betriebsbedingungen des Batterieladegeräts gemäß dem Typ der eingesetzten Batterie (5) variieren.

12. Einheit nach Anspruch 11, **dadurch gekennzeichnet, dass** das Batterieladegerät der Batterie (5) während Wiederaufladung einen konstanten Strom zuführt.

13. Einheit nach Anspruch 11 oder 12, **dadurch gekennzeichnet, dass** das Batterieladegerät eine Schaltstromversorgungseinheit (102) und Rückkopplungsmittel aufweist, die die Stromversorgungsbedingungen in solcher Weise modifizieren, dass der Wiederaufladestrom der Batterie (5) konstant gehalten wird.

14. Notlichtvorrichtung, die kombiniert einen Anschluss an eine Stromversorgungsleitung, ein Vorschaltgerät zum Speisen mindestes einer Entladelampe von dem durch die Leitung gelieferten Strom, und eine Noteinheit aufweist, wie sie nach einem oder mehreren der vorhergehenden Ansprüche beansprucht wird.

**15.** Verfahren zum Speisen einer Entladelampe in Notfallbedingungen mittels einer Notbatterie (5), bei dem die Lampe (L) von der Batterie durch einen Inverter (9) gespeist wird, wobei die Versorgung von der Batterie unterbrochen wird, wenn die Spannung über den Batterieanschlüssen unter einen minimale Spannungswert fällt; **gekennzeichnet durch** die Schritte: Vorsehen einer Einstellschaltung zum Einstellen einer variablen minimalen Spannung über den Anschlüssen der Batterie, Bestimmen des Werts der Nennspannung der Batterie (5); Einstellen, mittels der Schaltung, des Werts der minimalen Spannung ($V_{undervoltage}$) als eine Funktion des so bestimmten Nennspannungswerts der Batterie.

**16.** Verfahren nach Anspruch 15, **dadurch gekennzeichnet, dass** die Nennspannung automatisch während Notbetrieb bestimmt wird.

**17.** Verfahren nach Anspruch 16, **gekennzeichnet durch** die Stufen:

- Einschalten der Noteinheit;
- Bestimmen der Batterienennspannung nach einer Wartezeit (ungefähr 30-60 s);
- Einstellen der minimale Spannung ($V_{undervoltage}$)
- Speichern der minimalen Spannung.

**Revendications**

**1.** Bloc d'éclairage de sécurité comprenant

- une connexion pour une batterie (5),
- un inverseur (9) pour fournir, en situation d'urgence, un courant de décharge de ladite batterie (5) à une lampe (L) qui peut être connectée audit bloc,
- un chargeur de batterie (7),

**caractérisé en ce qu'**il dispose d'un moyen pour fixer une tension de fonctionnement minimum variable ($V_{sous-tension}$) aux bornes de la batterie, en-dessous de laquelle le courant de décharge de ladite batterie est interrompu, ladite tension de fonctionnement minimum étant réglable de façon variable en fonction de la tension nominale de la batterie (5).

**2.** Bloc selon la revendication 1, **caractérisé en ce qu'**il comprend un circuit pour reconnaître la tension nominale de la batterie.

**3.** Bloc selon la revendication 2, **caractérisé en ce que** ledit circuit de reconnaissance de tension de batterie a un commutateur temporisé (121) qui est fermé après un intervalle de temps prédéterminé suivant le début de la fourniture du courant de décharge de ladite batterie audit inverseur (9).

**4.** Bloc selon la revendication 2 ou 3, **caractérisé en ce qu'**il comprend une pluralité de résistances ($R_1$ - $R_K$) qui peuvent être connectées en parallèle avec un noeud (129), le nombre de résistances connectées audit noeud étant déterminé par la tension nominale de batterie et la tension audit noeud étant une fraction de la tension nominale de batterie (5), déterminée à partir du nombre desdites résistances connectées en parallèle.

**5.** Bloc selon la revendication 2, 3 ou 4, **caractérisé en ce que** ledit circuit de reconnaissance comprend un moyen pour stocker la tension de la batterie.

**6.** Bloc selon la revendication 4 ou 5, **caractérisé en ce que** ledit circuit de reconnaissance comprend une pluralité de comparateurs (125.1 - 125.K), chacun desquels compare un signal proportionnel à la tension nominale de batterie avec un signal de comparaison ($V_{R1}$ - $V_{RK}$), lesdits signaux de comparaison ayant une valeur croissant d'un minimum à un maximum selon la tensions nominale des batteries (5) utilisables avec ledit bloc, les sorties desdits comparateurs étant connectées auxdites résistances ($R_1$ - $R_K$) et la valeur du signal de sortie de chaque comparateur déterminant si ou non la résistance correspondante ($R_1$ - $R_K$) est connectée en parallèle audit noeud (129).

**7.** Bloc selon la revendication 6, **caractérisé en ce qu'**il comprend, pour chaque comparateur, un circuit de stockage (127.1 - 127.K)

**8.** Bloc selon une ou plusieurs des revendications 2 à 5, **caractérisé en ce que** ledit circuit de reconnaissance comprend un microprocesseur (161).

**9.** Bloc selon la revendication 8, **caractérisé en ce que** ledit microprocesseur a une entrée à laquelle un signal est appliqué qui est une fonction de la tension nominale de batterie, et une pluralité de sorties associées aux résistances correspondantes ($R_1$ - $R_K$), ledit processeur connectant à un noeud (129) un nombre desdites résistances, variable en fonction du signal à ladite entrée.

**10.** Bloc selon la revendication 8, **caractérisé en ce que** ledit microprocesseur a une entrée à laquelle un signal est appliqué qui est une fonction de la tension nominale de batterie, et une sortie avec un signal modulé en largeur d'impulsion, dont le facteur d'utilisation dépend du signal d'entrée.

**11.** Bloc selon une ou plusieurs des revendications précédentes, **caractérisé en ce que** les conditions de fonctionnement dudit chargeur de batterie varient selon le type de batterie (5) intégré.

**12.** Bloc selon la revendication 11, **caractérisé en ce que** ledit chargeur de batterie fournit un courant constant à ladite batterie (5) pendant la recharge.

**13.** Bloc selon la revendication 11 ou 12, **caractérisé en ce que** ledit chargeur de batterie comprend une unité de fourniture d'énergie à commutation (103) et un moyen de rétroaction qui modifie les conditions de fourniture d'énergie de façon à garder constant le courant de recharge de batterie (5).

**14.** Appareil d'éclairage de sécurité qui comprend, en combinaison, une connexion à une ligne d'alimentation électrique, un ballast pour alimenter au moins une lampe à décharge en l'énergie fournie par ladite ligne, et un bloc de sécurité selon une ou plusieurs des revendications précédentes.

**15.** Procédé pour alimenter une lampe à décharge en condition de sécurité par le moyen d'une batterie de sécurité (5), dans lequel ladite lampe (L) est alimentée à partir de ladite batterie par l'intermédiaire d'un inverseur (9), dans lequel l'alimentation par ladite batterie est interrompue quand la tension aux bornes de la batterie devient inférieure à une valeur de tension minimum; **caractérisé par** les étapes de : procurer un circuit de réglage pour fixer une tension minimum variable aux bornes de ladite batterie; déterminer la valeur de la tension nominale de ladite batterie (5); au moyen dudit circuit, régler la valeur de ladite tension minimum ($V_{sous-tension}$) en fonction de la valeur de tension nominale de ladite batterie donc déterminée.

**16.** Procédé selon la revendication 15, **caractérisé en ce que** ladite tension nominale est déterminée automatiquement pendant le fonctionnement de sécurité.

**17.** Procédé selon la revendication 16, **caractérisé par** les étapes de :

- enclencher le bloc de sécurité;
- déterminer la tension nominale de batterie après un délai d'attente (approximativement 30 - 60 s);
- fixer la tension minimum ($V_{sous-tension}$) ;
- stocker la tension minimum.

Fig. 1

Fig. 2

*103*

$I_{charge}$

*105A*

*101*

*5*

**Fig. 3**

*107*

*105B*

*7*

*111*

*109*

$\Sigma$

$I_{Ref}$

**Fig. 4**

$I$

$I_1$

$I_2$

$(t)$

$t_1$    $t_2$

$V_{cc}$

*125.1*    *127.1*

$R_c$

$R_1$    *129*

$V_{R.1}$    $V_1$

*125.2*    *127.2*

$R_2$

$V_{R2}$    $V_2$

*125.k*    *127_k*

$R.k$

$V_{R.k}$    $V_k$

$R_n$

*121*

**Fig.5**

$V_{bat}$

Fig.6

Fig. 7

Fig.8

Fig.9

Fig. 9A